# DEMANDE DE BREVET EUROPEEN

(11) **EP 3 079 251 A1**
(43) Date de publication de la demande: **12.10.2016**
(21) Numéro de dépôt: 15193345.4
(22) Date de dépôt: 06.11.2015
(51) Int. Cl.: H02M 7/162, H02M 1/36, H02M 7/06, H02M 7/12

(54) **CONVERTISSEUR DE PUISSANCE À LIMITATION DU COURANT D'APPEL**

(30) Priorité: 07.04.2015 FR 1552987
(71) Demandeur: STMicroelectronics (Tours) SAS, 37100 Tours (FR)
(72) Inventeur: GONTHIER, Laurent, 37000 TOURS (FR); NINA, Muriel, 37210 VOUVRAY (FR)
(74) Mandataire: Thibon, Laurent

(57) **Abrégé**

L'invention concerne un convertisseur alternatif-continu comportant une première borne (12) et une deuxième borne (14), destinées à recevoir une tension alternative (Vac) ; une troisième borne (16) et une quatrième borne (18), destinées à fournir une première tension continue (Vdc) ; un pont de redressement (3) dont des bornes d'entrée (32, 34) sont, respectivement, reliées par l'intermédiaire d'un élément résistif (22) à la première borne, et connectées à la deuxième borne, et dont des bornes de sortie sont respectivement connectées aux troisième et quatrième bornes ; un premier élément de redressement commandable (Th1) couplant la première borne à la troisième borne ; et un deuxième élément de redressement commandable (Th2) couplant la quatrième borne à la première borne.

## Description

### Domaine

La présente description concerne de façon générale les dispositifs électroniques et, plus particulièrement, les convertisseurs alternatif-continu. La présente description s'applique de façon générale à tout système utilisant un pont redresseur, par exemple les circuits de commande de moteurs électriques, les chargeurs électriques, les alimentations à découpage, etc.

### Exposé de l'art antérieur

On connait de nombreuses architectures de convertisseurs alternatif-continu, basées sur des éléments de redressement commandables (thyristors, par exemple) ou non (diodes), montés en pont redresseur, alimentés par une tension alternative et fournissant une tension continue, cette tension continue étant le cas échéant elle-même reconvertie en tension alternative.

On souhaite généralement limiter le courant d'appel, c'est-à-dire les pics de courant qui se produisent à chaque alternance de la tension alternative tant que la tension aux bornes d'un condensateur en sortie du pont de redressement n'a pas atteint un niveau suffisant et ceci notamment dans les phases de démarrage.

Les documents US 6493255 et JP-H-1278258 décrivent des exemples de convertisseurs alternatif-continu.

### Résumé

Un mode de réalisation pallie tout ou partie des inconvénients des circuits usuels de commande d'un convertisseur de puissance.

Un mode de réalisation vise à proposer un circuit de limitation de courant d'appel dans un convertisseur de puissance.

Un mode de réalisation propose une solution compatible avec une fonction doublage de tension au niveau d'un pont redresseur alimenté par la tension alternative.

Ainsi, un mode de réalisation prévoit un convertisseur alternatif-continu comportant :
une première borne et une deuxième borne, destinées à recevoir une tension alternative ;
une troisième borne et une quatrième borne, destinées à fournir une première tension continue ;
un pont de redressement dont des bornes d'entrée sont, respectivement, reliées par l'intermédiaire d'un élément résistif à la première borne, et connectées à la deuxième borne, et dont des bornes de sortie sont respectivement connectées aux troisième et quatrième bornes ;
un premier élément de redressement commandable couplant la première borne à la troisième borne ; et
un deuxième élément de redressement commandable couplant la quatrième borne à la première borne.

Selon un mode de réalisation, les éléments de redressement sont commandés après une phase de démarrage où l'élément résistif limite les appels de courant.

Selon un mode de réalisation, deux éléments capacitifs en série relient les troisième et quatrième bornes, un commutateur connectant le point milieu entre les éléments capacitifs à la deuxième borne.

Selon un mode de réalisation, les premier et deuxième éléments de redressement sont des thyristors à gâchette de cathode.

Selon un mode de réalisation, le premier élément de redressement est un thyristor à gâchette d'anode commandable par extraction d'un courant de gâchette et le deuxième élément de redressement est un thyristor à gâchette de cathode commandable par injection et ou extraction d'un courant de gâchette.

Selon un mode de réalisation, les gâchettes des thyristors sont commandées par un même transformateur, excité par un signal alternatif.

Selon un mode de réalisation, les gâchettes des thyristors sont commandées par un même transformateur, excité par un signal carré périodique, positif et négatif.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon schématique, un exemple d'architecture usuelle de convertisseur alternatif-continu équipé d'un circuit de limitation du courant d'appel ;
la figure 2 représente, de façon schématique, une modification du montage de la figure 1 pour réaliser un convertisseur doubleur de tension ;
la figure 3 représente, de façon schématique, un mode de réalisation de convertisseur alternatif-continu ;
les figures 4A, 4B, 4C et 4D illustrent, par des chronogrammes, le fonctionnement du convertisseur de la figure 3, en mode doubleur de tension ;
les figures 5A, 5B, 5C et 5D illustrent, par des chronogrammes, le fonctionnement du convertisseur de la figure 3, en mode suiveur ;
la figure 6 représente, de façon partielle, un autre mode de réalisation d'un convertisseur ;
la figure 7 représente encore un autre mode de réalisation d'un convertisseur ;
la figure 8 est une vue en coupe schématique de réalisation d'un thyristor à gâchette de cathode à courant de gâchette positif ; et
la figure 9 est une vue en coupe schématique de réalisation d'un thyristor à gâchette de cathode à courant de gâchette négatif.

### Description détaillée

De mêmes éléments ont été désignés par de mêmes références aux différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les éléments utiles à la compréhension des modes de réalisation décrits ont été représentés et seront détaillés. En particulier, les circuits alimentés par le convertisseur de puissance n'ont pas été détaillés, les modes de réalisation décrits étant compatibles avec les applications usuelles. Dans la description, le terme "connecté" désigne une connexion directe entre deux éléments, alors que les termes "couplé" et "relié" désignent une connexion entre deux éléments qui peut être directe ou par l'intermédiaire d'un ou plusieurs autres éléments. Lorsque l'on fait référence aux termes "environ", "approximativement" ou "de l'ordre de", cela signifie à 10 % près, de préférence à 5 % près.

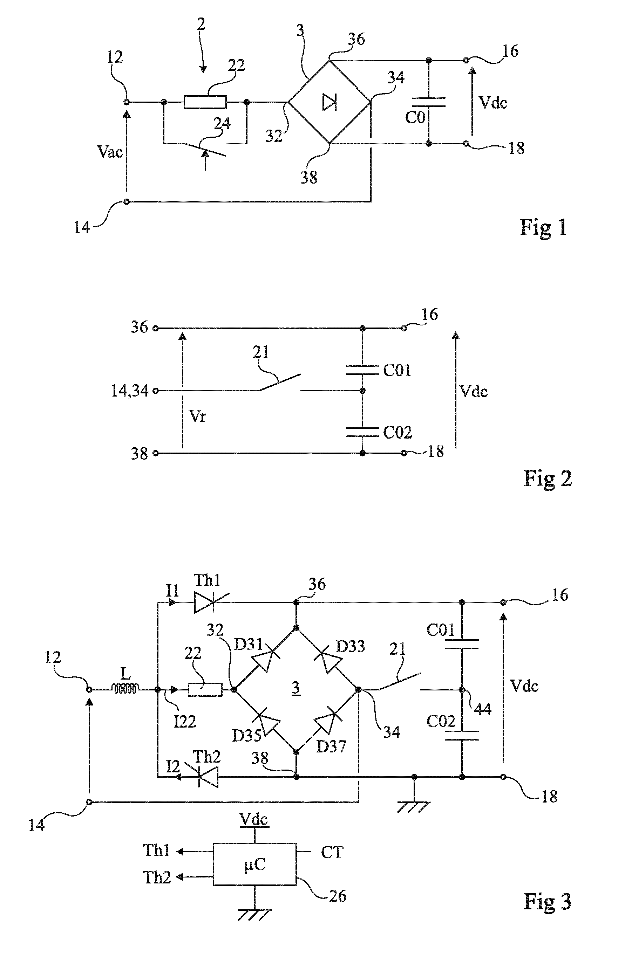

La figure 1 représente, de façon schématique, un exemple d'architecture usuelle de convertisseur alternatif-continu équipé d'un circuit de limitation du courant d'appel.

Deux bornes d'entrée 12 et 14 sont destinées à recevoir une tension alternative Vac, par exemple la tension du réseau de distribution électrique (par exemple 230 ou 120 volts, 50 ou 60 Hz). La borne 12 est reliée, par l'intermédiaire d'un montage 2 limiteur de courant d'appel, à une première borne 32 d'entrée de redressement d'un pont redresseur 3 (par exemple, double alternance) dont la seconde borne 34 d'entrée de redressement est connectée à la borne 14. Les sorties redressées 36 et 38 du pont sont respectivement connectées à des bornes de sortie 16 et 18, fournissant une tension continue Vdc. Un condensateur C0 de stockage et lissage relie les bornes 16 et 18. Le montage limiteur de courant d'appel est constitué d'une résistance 22, reliant les bornes 12 et 32, et d'un interrupteur 24 actionnable pour court-circuiter la résistance 22. Au démarrage (condensateur C0 déchargé), l'interrupteur 24 est ouvert et la résistance 22 limite le courant de charge du condensateur C0. En régime établi, l'interrupteur 24 est fermé pour court-circuiter la résistance et réduire les pertes.

La figure 2 représente, de façon schématique, une modification du montage de la figure 1 pour réaliser un convertisseur doubleur de tension. La borne 34 est reliée, par l'intermédiaire d'un interrupteur 21, à un point milieu entre deux éléments capacitifs C01 et C02 connectant les bornes 16 et 18, le condensateur C0 pouvant être supprimé. En supposant que les éléments C01 et C02 sont de même capacité, la tension Vdc entre les bornes 16 et 18 correspond, en régime établi, environ au double de la tension crête Vac entre les bornes 12 et 14.

D'autres solutions utilisent des interrupteurs commandés, de type thyristor, le plus souvent, comme présenté dans le document US 6,493,245, pour court-circuiter la résistance de limitation de courant d'appel. Ce document décrit plusieurs réalisations, soit avec un seul thyristor, soit avec deux thyristors. Ces deux réalisations ne permettent pas de limitation du courant d'appel par l'élément résistif lorsqu'un dispositif doubleur de tension est connecté en sortie du circuit. En effet, aucun élément résistif ne limite le courant de charge du condensateur C02 lorsque l'élément 21 est fermé.

Des solutions plus élaborées, comme celle présentée dans le document US-A-2012/230075, utilisent, entre une borne d'entrée d'application de la tension alternative et le pont redresseur, un dispositif de commande de l'angle de phase de mise en conduction du pont, c'est-à-dire de sélection de l'instant, à chaque alternance de la tension alternative, à partir duquel le pont de redressement est alimenté. Dans un tel cas, le démarrage du convertisseur requiert une source de tension pour alimenter un circuit de commande de l'interrupteur de contrôle de phase. Ces solutions actuelles nécessitent des montages complexes afin d'assurer un réglage précis des instants d'amorçage.

Dans le montage de la figure 1, la présence de l'interrupteur 24 engendre des pertes en régime permanent. En pratique, cet interrupteur peut être réalisé par un triac et les pertes sont liées à la résistance série à l'état passant de ce triac.

La figure 3 représente, de façon schématique, un mode de réalisation de convertisseur alternatif-continu.

On retrouve un pont redresseur 3 dont des bornes d'entrées 32 et 34 sont couplées à des première et deuxième bornes 12 et 14 d'application d'une tension alternative Vac et dont des bornes de sortie redressée 36 et 38 sont connectées à des troisième et quatrième bornes 16 et 18 de fourniture d'une tension continue Vdc. Au moins un élément capacitif connecte entre elles les bornes 16 et 18.

Le pont redresseur 3 est, dans cet exemple, constitué de quatre diodes D31, D33, D35 et D37. Les diodes D31 et D33 relient respectivement les bornes 32 et 34 à la borne 36 (cathodes des diodes D31 et D33 côté borne 36) et les diodes D35 et D37 relient respectivement les bornes 32 et 34 à la borne 38 (anodes des diodes D35 et D37 côté borne 38).

Dans l'exemple de la figure 3, on suppose un convertisseur susceptible de fonctionner en mode doubleur de tension ou en mode suiveur. Par conséquent, on prévoit deux éléments capacitifs C01 et C02 (de même valeur) en série entre les bornes 16 et 18 et un élément 21 (par exemple, un cavalier, un interrupteur, un relais, etc.) connectant le point milieu 44 entre les éléments capacitifs C01 et C02 à la borne 14 (donc à la borne 34). Lorsque la connexion 21 est ouverte (pas de liaison entre la borne 14 et le noeud 44), le pont 3 fonctionne en mode suiveur, c'est-à-dire que la valeur maximale de la tension Vdc correspond à la valeur crête de la tension Vac (aux pertes près). Quand la connexion 21 est fermée, le convertisseur fonctionne en mode doubleur de tension, c'est-à-dire que la valeur maximale de la tension Vdc correspond au double de la valeur crête de la tension Vac.

Pour réaliser la fonction de limiteur de courant d'appel au démarrage du convertisseur, un élément résistif 22 connecte les bornes 12 et 32. Toutefois, au lieu de court-circuiter cet élément par un interrupteur bidirectionnel 24 comme en figure 1, on prévoit ici deux éléments de redressement unidirectionnels commandables, en pratique des thyristors Th1 et Th2 qui relient la borne 12 à, respectivement, la borne 36 et la borne 38. Le thyristor Th1 a son anode côté borne 12. Le thyristor Th2 a son anode côté borne 38.

De préférence, un élément inductif L est intercalé entre la borne 12 et la résistance 22, les thyristors Th1 et Th2 étant connectés au point milieu entre la résistance et l'inductance L.

Les thyristors Th1 et Th2 sont commandés par un circuit électronique, par exemple, un microcontrôleur 26, chargé de générer des impulsions de commande des thyristors Th1 et Th2 et contrôlant les gâchettes de ces thyristors par le biais d'un ou deux coupleurs isolés (non représentés en figure 3), de technologie optique, magnétique ou capacitive. Le microcontrôleur 26 reçoit différentes consignes CT ou mesures afin de générer ces impulsions aux bons moments en fonction, entre autres, des besoins de la charge alimentée par le convertisseur.

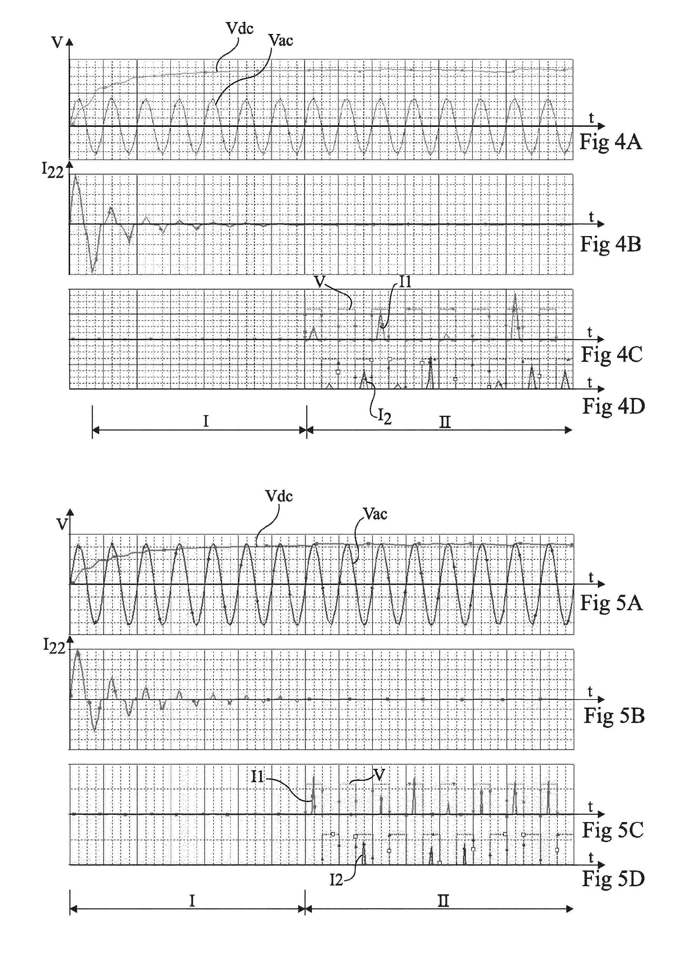

Les figures 4A, 4B, 4C et 4D illustrent, par des chronogrammes, le fonctionnement du convertisseur de la figure 3, en mode doubleur de tension (interrupteur 21 fermé). La figure 4A représente des exemples d'allures de la tension Vac et de la tension Vdc obtenue. La figure 4B illustre l'allure du courant I22 dans la résistance 22. Les figures 4C et 4D illustrent les allures des courants I1 et I2 dans les thyristors Th1 et Th2.

Dans une première phase I, tant que la tension Vdc n'a pas atteint sa valeur de régime permanent, c'est-à-dire approximativement le double de la valeur crête de la tension Vac, les thyristors Th1 et Th2 restent bloqués. Les condensateurs C01 et C02 se chargent alors au travers de la résistance R22 et du pont 3 de façon non commandée. Pendant les alternances positives, le courant circule depuis la borne 12, à travers l'inductance L optionnelle, à travers la résistance 22, la diode D31, le condensateur C01 et l'interrupteur 21 pour rejoindre la borne 14. Pendant les alternances négatives, le courant circule depuis la borne 14, à travers l'interrupteur 21, le condensateur C02, la diode D35, la résistance 22 et l'inductance L éventuelle pour rejoindre la borne 12.

Dans une deuxième phase II, de régime permanent, où la résistance 22 n'est plus nécessaire pour limiter les appels de courant, cette résistance 22 est, à chaque alternance de la tension Vac, court-circuitée par l'un ou l'autre des thyristors Th1 et Th2 selon le signe de l'alternance. Pendant les alternances positives, le courant circule depuis la borne 12, à travers l'inductance L optionnelle, à travers le thyristor Th1, le condensateur C01 et l'interrupteur 21 pour rejoindre la borne 14. Pendant les alternances négatives, le courant circule depuis la borne 14, à travers l'interrupteur 21, le condensateur C02, le thyristor Th2 et l'inductance L éventuelle pour rejoindre la borne 12.

Les figures 5A, 5B, 5C et 5D illustrent, par des chronogrammes, le fonctionnement du convertisseur de la figure 3, en mode suiveur (interrupteur 21 ouvert). La figure 5A représente des exemples d'allures de la tension Vac et de la tension Vdc obtenue. La figure 5B illustre l'allure du courant I22 dans la résistance 22. Les figures 5C et 5D illustrent les allures des courants I1 et I2 dans les thyristors Th1 et Th2.

Par rapport au fonctionnement illustré en relation avec les figures 4A à 4D, une différence est que l'amplitude de la tension Vdc n'excède pas la valeur crête de la tension Vac.

Dans une première phase I, tant que la tension Vdc n'a pas atteint sa valeur de régime permanent, c'est-à-dire approximativement la valeur crête de la tension Vac, les thyristors Th1 et Th2 restent bloqués. Les condensateurs C01 et C02 se chargent alors au travers de la résistance R22 et du pont 3 de façon non commandée. Pendant les alternances positives, le courant circule depuis la borne 12, à travers l'inductance L optionnelle, à travers la résistance 22, la diode D31, le condensateur C01, le condensateur C02 et la diode D37 pour rejoindre la borne 14. Pendant les alternances négatives, le courant circule depuis la borne 14, à travers la diode D33, le condensateur C01, le condensateur C02, la diode D35, la résistance 22 et l'inductance L éventuelle pour rejoindre la borne 12.

Dans une deuxième phase II, de régime permanent, où la résistance 22 n'est plus nécessaire pour limiter les appels de courant, cette résistance 22 est comme en mode doubleur, à chaque alternance de la tension Vac, court-circuitée par l'un ou l'autre des thyristors Th1 et Th2 selon le signe de l'alternance. Pendant les alternances positives, le courant circule depuis la borne 12, à travers l'inductance L optionnelle, à travers le thyristor Th1, le condensateur C01, le condensateur C02 et la diode D37 pour rejoindre la borne 14. Pendant les alternances négatives, le courant circule depuis la borne 14, à travers la diode D33, le condensateur C01, le condensateur C02, le thyristor Th2 et l'inductance L éventuelle pour rejoindre la borne 12.

Les thyristors Th1 et Th2 sont, dans les phases II, de préférence commandés en angle de phase afin d'être mis en conduction dans les phases décroissantes de la tension Vac redressée, en fonction du niveau de charge du ou des condensateurs.

Dans la représentation des figures 4C, 4D, 5C et 5D, les amplitudes des courants I1 et I2 selon les alternances, dépendent de la consommation en aval du convertisseur et illustrent un exemple arbitraire.

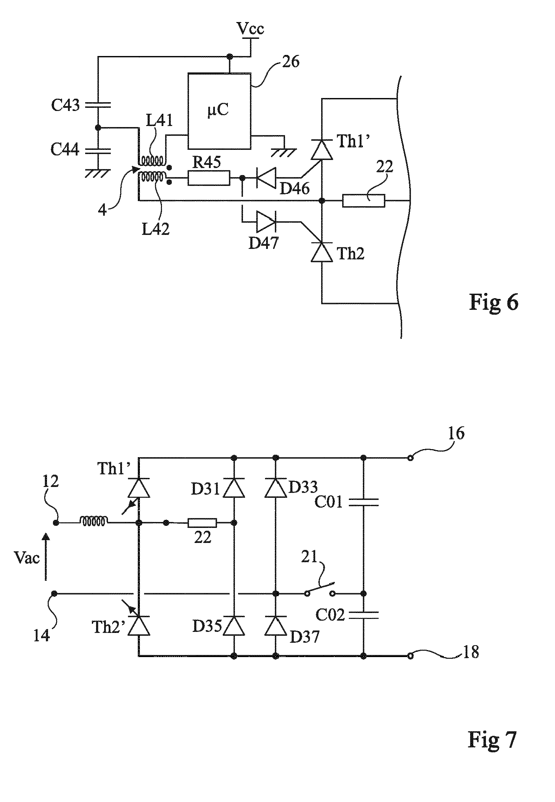

La figure 6 représente, de façon partielle, un autre mode de réalisation d'un convertisseur.

Par rapport au mode de réalisation de la figure 3, le thyristor Th1 est remplacé par un thyristor Th1' à gâchette d'anode. Dans ce cas, les deux thyristors peuvent être commandés à partir d'une même alimentation auxiliaire en utilisant un transformateur d'impulsions alors que, dans le cas de la figure 3, il est nécessaire de générer des courants à partir de tensions n'ayant pas la même référence, ce qui nécessite un coupleur isolé différent pour chaque thyristor Th1 et Th2.

Dans l'exemple de la figure 6, un premier enroulement L41 d'un transformateur 4 reçoit une commande impulsionnelle d'un microcontrôleur 26 alimenté par une tension continue Vcc. L'autre extrémité de l'enroulement L41 est reliée au point milieu d'une association en série de deux éléments capacitifs C43 et C44 entre la borne d'alimentation Vcc et la masse. Un deuxième enroulement L42 du transformateur 4 a une extrémité connectée au point milieu entre les thyristors Th1' et Th2, et son autre extrémité couplée aux gâchettes des thyristors Th1' et Th2. Ce couplage est réalisé par l'intermédiaire d'une résistance série R45 optionnelle et de deux diodes D46 et D47 connectant respectivement l'enroulement L42 (ou la résistance R45) aux gâchettes des thyristors Th1' et Th2. La gâchette d'anode du thyristor Th1' est connectée à l'anode de la diode D46 tandis que la gâchette de cathode du thyristor Th2 est reliée à la cathode de la diode D47, la cathode de la diode D46 et l'anode de la diode D47 étant connectées à l'enroulement L42 (ou à la résistance R45).

Le circuit de la figure 6 permet donc d'injecter à la fois un courant de gâchette au thyristor Th2, et d'extraire un courant de gâchette du thyristor Th1'. Les deux thyristors sont donc commandés à chaque fois qu'une impulsion alternative (de type +Vcc/2 -Vcc/2) est appliquée au primaire L41 du transformateur 4.

Si l'on souhaite distinguer les deux commandes, par exemple en ne commandant le thyristor Th1' que lors des demi-alternances positives de la tension Vac, et le thyristor Th2 que lors des demi-alternances négatives de la tension Vac, cela est possible en appliquant aux bornes de L41 respectivement pendant ces deux types de demi-alternances, un signal de type -Vcc / 0 (pour amorcer le thyristor Th1'), et un signal de type +Vcc / 0 (pour amorcer le thyristor Th2). De tels signaux disposant d'une composante continue, le transformateur 4 ne devra pas disposer de matériau magnétique saturable afin d'éviter la saturation de ce matériau et assurer le bon fonctionnement du transfert des signaux de commande. On pourra ainsi par exemple utiliser un transformateur sans noyau magnétique (ou "transformateur à air"). Pour générer les signaux de commande +Vcc/0 et -Vcc/0 aux bornes de l'enroulement L41, le pont diviseur constitué par C43 et C44 est remplacé par un montage dit push-pull, constitué de deux transistors.

Selon un autre mode de réalisation, les thyristors Th1' et Th2 sont choisis pour fonctionner tous les deux par extraction de courant de leur gâchette. Ainsi, une même tension d'alimentation Vdd dite négative (c'est-à-dire dont le niveau haut, VDD, est connecté à la borne 32, elle-même reliée à la borne 12 du secteur) suffit à alimenter les deux thyristors Th1' et Th2. Cette même alimentation pourrait servir à alimenter les gâchettes de triacs dont la référence de commande serait connectée à cette borne 32. De tels triacs auraient l'utilité de contrôler des charges à courant alternatif alimentées par la tension Vac.

La figure 7 représente encore un autre mode de réalisation d'un convertisseur.

Par rapport au mode de réalisation de la figure 3, le thyristor Th1 est remplacé par un thyristor Th1' à gâchette d'anode. Par ailleurs, le thyristor Th2 est remplacé par un thyristor Th2' commandable par un courant de gâchette négatif, c'est-à-dire, en tirant du courant sur sa gâchette. Dans ce cas, les deux thyristors peuvent être commandés à partir d'une même alimentation secondaire dite négative (c'est-à-dire dont le niveau haut, VDD, est relié à la borne 12 du secteur).

Le fonctionnement des montages des figures 6 et 7 se déduit du fonctionnement exposé en relation avec la figure 3.

La réalisation d'un thyristor à gâchette de cathode commandable par un courant négatif est en elle-même connue.

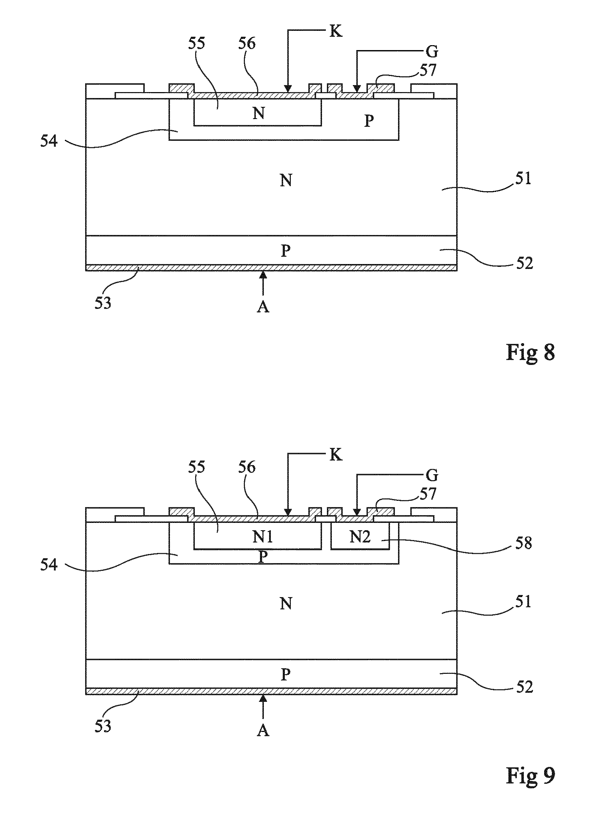

Les figures 8 et 9 sont des coupes schématiques de réalisation de thyristors à gâchette de cathode respectivement à courant de gâchette positif ou injection de courant (cas le plus courant) et à courant de gâchette négatif ou extraction de courant.

Selon ces exemples, le thyristor est réalisé dans un substrat 51 de type N. En face arrière, une couche 52 de type P définit une région d'anode, l'électrode d'anode A étant obtenue par une métallisation 53 de reprise de contact de cette région 52. Un caisson 54 de type P est réalisé en face avant. Une région de cathode 55 de type N (N1) est formée dans ce caisson 54 et une métallisation 56 de reprise de contact de cette région 55 définit l'électrode de cathode K.

Dans le cas de la figure 8, un contact 57 de gâchette est réalisé au niveau du caisson de type P 54. Ainsi, l'injection d'un courant de gâchette amorce le thyristor si celui-ci est convenablement polarisé (tension anode-cathode positive).

Dans le cas de la figure 9, une région 58 de type N (N2) est ajoutée sous le contact 57 de gâchette. Cette région 58 permet un amorçage par un courant de gâchette négatif (c'est-à-dire circulant depuis la cathode K jusqu'à la gâchette G) en autorisant une injection d'électrons dans le substrat 51 de type N qui correspond à la base du transistor bipolaire de type PNP formé par les régions 52-51-54.

En variante, la région 58 peut être scindée au moins en deux afin de permettre un contact direct de la région P (54) sur la gâchette. Une telle variante, appelée "trou de court-circuit" permet d'améliorer l'immunité aux transitoires de tension du thyristor et permet aussi la commande par un courant de gâchette positif (c'est-à-dire circulant depuis la gâchette G jusqu'à la cathode K).

Divers modes de réalisation ont été décrits. Diverses variantes et modifications apparaîtront à l'homme de l'art. Par exemple, les thyristors peuvent être remplacés par des triacs, chacun en série ou non avec une diode. De plus, la mise en oeuvre pratique des modes de réalisation qui ont été décrits est à la portée de l'homme du métier à partir des indications fonctionnelles données ci-dessus. En particulier, la programmation du microcontrôleur dépend de l'application et les réalisations décrites sont compatibles avec les applications usuelles utilisant un microcontrôleur ou équivalent pour commander un convertisseur.

## Revendications

1. Convertisseur alternatif-continu comportant :
une première borne (12) et une deuxième borne (14), destinées à recevoir une tension alternative (Vac) ;
une troisième borne (16) et une quatrième borne (18), destinées à fournir une première tension continue (Vdc) ;
un pont de redressement (3) dont des bornes d'entrée (32, 34) sont, respectivement, reliées par l'intermédiaire d'un élément résistif (22) à la première borne, et connectées à la deuxième borne, et dont des bornes de sortie sont respectivement connectées aux troisième et quatrième bornes ;
un premier élément de redressement commandable (Th1, Th1') couplant la première borne à la troisième borne ; et
un deuxième élément de redressement commandable (Th2, Th2') couplant la quatrième borne à la première borne.

2. Convertisseur selon la revendication 1, dans lequel les éléments de redressement (Th1, Th1'; Th2, Th2') sont commandés après une phase de démarrage (I) où l'élément résistif (22) limite les appels de courant.

3. Convertisseur selon la revendication 1 ou 2, dans lequel deux éléments capacitifs en série (C01, C02) relient les troisième et quatrième bornes (16, 18), un commutateur (21) connectant le point milieu entre les éléments capacitifs à la deuxième borne.

4. Convertisseur selon l'une quelconque des revendications 1 à 3, dans lequel les premier et deuxième éléments de redressement sont des thyristors à gâchette de cathode.

5. Convertisseur selon l'une quelconque des revendications 1 à 3, dans lequel le premier élément de redressement (Th1') est un thyristor à gâchette d'anode commandable par extraction d'un courant de gâchette et le deuxième élément de redressement est un thyristor à gâchette de cathode (Th2) commandable par injection et ou extraction d'un courant de gâchette.

6. Convertisseur selon la revendication 5, dans lequel les gâchettes des thyristors sont commandées par un même transformateur, excité par un signal alternatif.

7. Convertisseur selon la revendication 5, dans lequel les gâchettes des thyristors sont commandées par un même transformateur, excité par un signal carré périodique, positif et négatif.
